# FASCICULE DE BREVET EUROPEEN

(11) **EP 0 789 657 B1**
(45) Date de publication et mention de la délivrance du brevet: **31.03.1999**
(21) Numéro de dépôt: 95907050.9
(22) Date de dépôt: 19.01.1995
(51) Int. Cl.: B63B 39/08, B60V 1/12

(54) **NAVIRE A EFFET DE SURFACE STABILISE EN ROULIS**
ROLLSTABILISIERTES LUFTKISSENBOOT
ROLL-STABILISED SURFACE-EFFECT VESSEL

(43) Date de publication de la demande: 20.08.1997
(73) Titulaire: Hassan, Eric, London SW7 1AP (GB)
(72) Inventeur: Hassan, Eric, London SW7 1AP (GB)
(74) Mandataire: Maillet, Alain
(86) Numéro de dépôt international: FR9500060
(87) Numéro de publication internationale: WO9622220

(56) Documents cités:
- FR-A- 2 612 475
- FR-A- 2 707 587
- GB-A- 2 022 040
- GB-A- 2 134 467
- GB-A- 2 184 408
- US-A- 4 271 779

## Description

La présente invention concerne un navire à effet de surface.

Les navires à effet de surface, en réduisant le volume du navire immergé au moyen d'un volume d'air en surpression formé entre les oeuvres mortes du navire et la surface de l'eau, permettent d'atteindre des vitesses supérieures à celles des navires conventionnels.

On a construit des catamarans à effet de surface comprenant deux flotteurs définissant entre eux et sous les oeuvres mortes du navire un tunnel fermé transversalement à l'avant et à l'arrière par des jupes avant et arrière souples et entre lesquelles de l'air est insufflé pour former un volume d'air en surpression exerçant une force de sustentation sur le navire. Ces catamarans se sont avérés particulièrement inconfortables en cas de houle traversière car, en raison de leur grande stabilité, ils tendent, après prise d'une inclinaison de roulis, à revenir brusquement vers leur position d'équilibre. Par ailleurs, les installations de propulsion et de production d'énergie ont un besoin permanent d'alimentation en eau, prélevée au niveau de la partie immergée des flotteurs. Le décollement d'un flotteur, à l'occasion d'un fort et brusque mouvement de roulis du catamaran, peut entraîner une rupture de l'alimentation en eau qui pertube le bon fonctionnement des installations précitées.

La présente invention vise à rémédier à ces inconvénients et elle y parvient par le fait que le navire comprend une carène centrale et deux quilles minces latérales situées de part et d'autre de la carène centrale, définissant chacune avec cette dernière et sous les oeuvres mortes du navire un tunnel d'air ouvert vers le bas sur la surface de l'eau et fermé transversalement à l'avant et à l'arrière par des jupes avant et arrière souples, par le fait que le navire comprend des soufflantes associées respectivement aux tunnels, pour y insuffler de l'air dans l'espace s'étendant entre les jupes avant et arrière et créer deux volumes indépendants d'air en surpression exerçant chacun une force de sustentation sur le navire, et par le fait que le bord inférieur d'une quille est conformé pour émerger partiellement après prise d'une inclinaison de roulis par le navire dans le sens soulevant cette quille, de manière à créer une fuite d'air latérale tendant à diminuer la force de sustentation du volume d'air en surpression délimité latéralement par cette quille d'autant plus fortement et rapidement que ladite inclinaison est grande, en vue d'amortir le mouvement de roulis du navire.

Les accélérations brusques des catamarans à effet de surface connus sont ainsi supprimées. Par ailleurs, en effectuant le prélèvement d'eau pour les installations de propulsion et de production d'énergie au niveau de la carène centrale qui demeure immergée quelque soit l'inclinaison de roulis, on s'affranchit des problèmes de rupture d'alimentation en eau précités.

D'autres caractéristiques et avantages de la présente invention apparaîtront à la lecture de la description détaillée qui va suivre, d'un exemple de réalisation non limitatif de l'invention, et à l'examen du dessin annexé sur lequel:
la Fig. 1 est une vue arrière schématique et partielle d'un navire conforme à l'invention,
la Fig. 2 est une vue analogue à la Fig. 1 après prise d'une inclinaison de roulis θ par le navire,
la Fig. 3 est une vue schématique de dessous montrant l'arrière du navire représenté sur les Figs 1 et 2, et
la Fig. 4 est une schématique en perspective de l'arrière du navire représenté sur les Figs. 1 à 3.

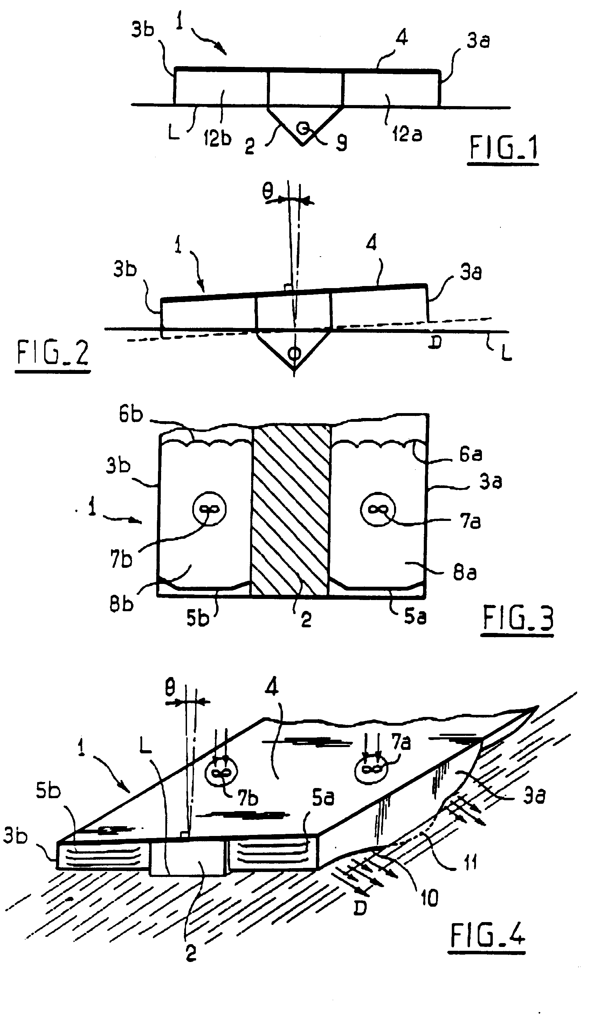

Les oeuvres mortes du navire à effet de surface 1 conforme à l'invention, représenté partiellement sur les Figs, sont schématisées dans un souci de clarté du dessin par un pont 4 allongé dans la direction d'avancement du navire, c'est-à-dire dans une direction parallèle au plan médian longitudinal du navire et perpendiculaire au plan des Figs. 1 et 2. Ces oeuvres mortes 4 sont prolongées vers le bas sur la longueur du navire par une carène centrale 2 effilée dans la direction d'avancement du navire, s'étendant symétriquement de part et d'autre du plan médian longitudinal de celui-ci. Des quilles minces latérales référencées 3a et 3b symétriques l'une de l'autre par rapport au plan médian longitudinal précité s'étendent latéralement de part et d'autre de la carène centrale 2 sous les oeuvres mortes 4, et de préférence, comme représenté sur la Fig. 4, depuis l'arrière du navire vers l'avant sur une longueur avantageusement comprise entre le tiers et la totalité de la longueur de la carène centrale. Les quilles minces latérales 3a et 3b ne participent que très peu à la flottaison du navire, qui reste assurée essentiellement par la carène centrale 2, et elles définissent respectivement avec cette dernière, sous les oeuvres mortes 4 du navire, des tunnels 12a et 12b ouverts vers le bas sur la surface de l'eau.

Chaque tunnel 12a et 12b est respectivement fermé transversalement à l'avant et à l'arrière par des jupes avant 6a, 6b et arrière 5a, 5b souples, connues en elles-mêmes. On préférera utiliser, conformément à une caractéristique avantageuse de l'invention, des jupes souples avant et arrière articulées autour d'axes horizontaux perpendiculaires à la direction d'avancement du navire. Deux soufflantes 7a et 7b insufflent de l'air respectivement dans les tunnels 12a et 12b entre les jupes avant et arrière pour créer deux volumes séparés d'air en surpression 8a et 8b exerçant chacun une force de sustentation sur le navire. On peut bien entendu proposer, sans sortir du cadre de la présente invention, d'insuffler de l'air dans les tunnels 12a et 12b au moyen d'un nombre plus élevé de souffantes, en fonction de la surpression nécessaire pour sustenter le navire, l'important étant ici l'indépendance des deux volumes d'air 8a et 8b.

Des moyens de propulsion connus en eux-mêmes sont intégrés à la carène centrale 2 du navire. On a représenté sur les Figs. une tuyère 9 de propulsion à réaction par jet d'eau. On peut proposer, sans sortir du cadre de l'invention, d'équiper également les quilles minces latérales 3a et 3b de moyens de propulsion.

Dans toute la description, on entend par inclinaison de roulis l'angle θ formé, lors du mouvement de roulis du navire, entre la verticale et le plan médian longitudinal du navire.

Conformément à l'invention, les quilles latérales minces présentent un bord inférieur 10 conformé pour émerger partiellement et créer une fuite d'air latérale D lorsqu'un mouvement de roulis suffisamment significatif fait prendre au navire une inclinaison θ supérieure à une valeur choisie. Le bord inférieur 10 d'une quille mince latérale présente un angle évolutif par rapport à l'horizontale, résultant d'un calcul mené par l'homme de métier pour déterminer le débit d'air de fuite nécessaire pour provoquer l'amortissement souhaité et le bord inférieur est contenu, dans l'exemple de réalisation décrit, dans un plan parallèle au plan médian longitudinal du navire. La surface de l'eau est référencée L sur les Figs. 1 et 2. Le bord inférieur 10 des quilles latérales 3a et 3b se situe, lorsque le navire présente une inclinaison θ nulle, à très faible profondeur sous la surface L comparativement à la ligne de quille de la carène centrale 2.

Dans l'exemple de réalisation représenté sur les Figs., le bord inférieur 10 des quilles minces latérales est curviligne, relevé vers l'arrière et vers l'avant de sorte que lorsqu'une quille est soulevée (la quille 3a sur les Figs. 2 et 4) après prise d'une inclinaison de roulis θ par le navire, les parties relevées du bord inférieur 10 émergent hors de la surface de l'eau et permettent à de l'air en surpression de quitter le volume d'air délimité par cette quille, ce qui diminue la force de sustentation exercée par ce dernier. Dans l'exemple décrit, la partie centrale 11 du bord inférieur 10 de la quille 3a reste immergée tant que l'inclinaison θ n'est pas supérieure à une valeur donnée. Elle se découvre néanmoins progressivement au fur et à mesure que l'inclinaison θ s'accroît, augmentant ainsi la section de passage de l'air de fuite D et diminuant ainsi d'autant plus l'effet sustentateur du volume d'air. Il se crée un deséquilibre des forces exercées par les volumes d'air 8a et 8b et un couple autour de l'axe longitudinal du navire tendant à s'opposer au mouvement de roulis. On notera, conformément à l'invention, que cette diminution de l'effet sustentateur s'effectue de façon calculée de sorte que l'on évite les brusques accélérations source d'inconfort des catamarans connus.

L'amortissement du mouvement de roulis s'effectue avantageusement de façon passive dans l'invention, sans qu'un équipement de stabilisation actif complexe et coûteux soit nécessaire. Un navire à effet de surface conforme à l'invention permet en outre, grâce à sa structure présentant en section transversale la forme générales d'un "T", de s'affranchir des problèmes de fléchissement du pont rencontrés sur les catamarans connus et causés par un chargement trop au centre. Par ailleurs, cette structure s'avère très résistante aux sollicitations mécaniques exercées par des houles diagonales. Enfin, les deux volumes d'air en surpression indépendants 8a et 8b, étant chacun long et étroit, se comportent comme un coussin d'air virtuel unique plus large et donc plus favorable à l'obtention de vitesses élevées sur l'eau.

## Revendications

1. Navire à effet de surface comprenant une carène centrale (2) et deux quilles minces latérales (3a, 3b) situées de part et d'autre de la carène centrale, définissant chacune avec cette dernière et sous les oeuvres mortes du navire (4) un tunnel d'air (12a, 12b) ouvert sur la surface de l'eau et fermé transversalement à l'avant et à l'arrière par des jupes avant et arrière souples (5a, 5b, 6a, 6b), des soufflantes associées respectivement aux tunnels, pour y insuffler de l'air dans l'espace s'étendant entre les jupes avant et arrière et créer deux volumes indépendants d'air en surpression (8a, 8b) exerçant chacun une force de sustentation sur le navire, le bord inférieur (10) d'une quille étant conformé pour émerger partiellement après prise d'une inclinaison de roulis (θ) par le navire dans le sens soulevant cette quille, de manière à créer une fuite d'air latérale (D) tendant à diminuer la force de sustentation du volume d'air en surpression délimité latéralement par cette quille d'autant plus fortement et rapidement que ladite inclinaison est grande, en vue d'amortir le mouvement de roulis du navire.

2. Navire selon la revendication 1, caractérisé en ce que les quilles latérales (3a, 3b) s'étendent depuis l'arrière du navire sur une distance comprise entre un tiers et la totalité de la longueur de la carène centrale (2).

3. Navire selon l'une des revendications 1 et 2, caractérisé en ce que des moyens de propulsion par jet d'eau (9) sont placés dans la carène.

4. Navire selon l'une des revendications 1 à 3, caractérisé en ce que lesdites jupes avant et arrière sont articulées autour d'axes horizontaux perpendiculaires à la direction d'avancement du navire.

5. Navire selon l'une des revendications 1 à 4, caractérisé en ce que le bord inférieur (10) d'une quille présente un angle évolutif par rapport à l'horizontal.

6. Navire selon l'une des revendication 1 à 5, carctérisé en ce que le bord inférieur (10) d'une quille est contenu dans un plan parallèle au plan médian longitudinal du navire.

## Claims

1. A surface-effect vessel comprising a central hull (2) and two thin side keels (3a, 3b) situated on either side of the central hull and each defining with the latter and beneath the upper works of the vessel (4) an air tunnel (12a, 12b) which is open on to the surface of the water and closed transversely forward and aft by flexible forward and aft skirts (5a, 5b, 6a, 6b), fans associated respectively with the tunnels in order to blow air there into the space extending between the forward and aft skirts and create two independent overpressure air volumes (8a, 8b) each exerting a lifting force on the vessel, the bottom edge (10) of a keel having a configuration such as partially to emerge after the vessel has assumed a roll inclination (Θ) in the direction in which said keel is lifted, so as to create a lateral air leakage (D) tending to reduce the lifting force of the overpressure air volume laterally defined by said keel all the more intensively and rapidly as the said inclination increases, in order to damp the roll movement of the vessel.

2. A vessel according to claim 1, characterised in that the side keels (3a, 3b) extend from the stern of the vessel over a distance of between one-third and the total length of the central hull (2).

3. A vessel according to claim 1 or 2, characterised in that water jet propulsion means (9) are disposed in the hull.

4. A vessel according to any one of claims 1 to 3, characterised in that the said forward and aft skirts are articulated about horizontal axes perpendicular to the direction of advance of the vessel.

5. A vessel according to any one of claims 1 to 4, characterised in that the bottom edge (10) of a keel has an evolutive angle with respect to the horizontal.

6. A vessel according to any one of claims 1 to 5, characterised in that the bottom edge (10) of a keel is contained in a plane parallel to the central longitudinal plane of the vessel.

## Patentansprüche

1. Luftkissenboot, enthaltend einen zentralen Kiel (2) und zwei schmale seitliche Kiele (3a, 3b), die zu beiden Seiten des zentralen Kiels angeordnet sind und jeweils mit diesem unter dem Oberwerk des Bootes (4) einen Lufttunnel (12a, 12b) bilden, der zur Wasseroberfläche hin offen und vorn und hinten durch flexible Schürzen (5a, 5b, 6a, 6b) quer verschlossen ist; Gebläse, die jeweils den Tunneln zugeordnet sind, um dort Luft in den Zwischenraum einzublasen, der sich zwischen den vorderen und hinteren Schürzen erstreckt und um zwei unabhängige Überdruck-Luftvolumen (8a, 8b) zu erzeugen, die jeweils eine Auftriebskraft auf das Boot ausüben, wobei der untere Rand (10) eines schmalen Kiels so angepaßt ist, daß er teilweise auftaucht, nachdem das Boot eine Schlingerneigung (θ) eingenommen hat, so daß dieser schmale Kiel angehoben wird, wodurch ein seitlicher Luftausstoß (D) erzeugt wird, der dazu neigt, die Auftriebskraft des durch diesen schmalen Kiel seitlich begrenzten Überdruck-Luftvolumens zu verringern, um die Rollbewegung des Bootes zu dämpfen, und zwar umso stärker und schneller je größer das Ausmaß der Neigung ist.

2. Boot nach Anspruch 1, dadurch gekennzeichnet, daß sich die schmalen Seitenkiele (3a, 3b) vom hinteren Teil des Bootes über eine Länge zwischen einem Drittel und der Gesamtlänge des zentralen Kiels (2) erstrecken.

3. Boot nach Anspruch 1 und 2, dadurch gekennzeichnet, daß Wasserstrahl-Antriebsmittel (9) angeordnet sind.

4. Boot nach einem der Ansprüche 1 bis 3, dadurch gekennzeichnet, daß die vorderen und hinteren Schürzen schwenkbar um Horizontalachsen angeordnet sind, die senkrecht zur Richtung der vorwärtsbewegung des Bootes stehen.

5. Boot nach einem der Ansprüche 1 bis 4, dadurch gekennzeichnet, daß der untere Rand (10) eines der schmalen Kiele einen in bezug auf die Horizontale evolutiven Winkel darstellt.

6. Boot nach einem der Ansprüche 1 bis 5, dadurch gekennzeichnet, daß der untere Rand (10) eines schmalen Kiels in einer Ebene parallel zur Längs-Mittelebene des Bootes gehalten wird.
